Europäisches Patentamt

European Patent Office

Office européen des brevets

(11) Publication number: **0 033 591**
**B1**

(12) # EUROPEAN PATENT SPECIFICATION

(45) Date of publication of patent specification: **14.08.85**

(51) Int. Cl.⁴: **H 04 L 11/08, G 06 F 11/32**

(21) Application number: **81300147.6**

(22) Date of filing: **14.01.81**

(54) **Improvements in or relating to data transmission systems.**

(30) Priority: **15.01.80 GB 8001297**

(43) Date of publication of application:
**12.08.81 Bulletin 81/32**

(45) Publication of the grant of the patent:
**14.08.85 Bulletin 85/33**

(84) Designated Contracting States:
**AT BE CH DE FR GB IT LI LU NL SE**

(56) References cited:
**DE-B-2 914 665**
**FR-A-2 441 887**
**GB-A-2 035 012**
**US-A-3 665 303**
**US-A-3 943 348**

**NACHRICHTENTECHNISCHE ZEITSCHRIFT,
vol. 32, no. 1, 1979, pages 16, 17 Berlin, DE.
RAASCH: "Testproblme in
Datenkommunikationssystemen"**

(73) Proprietor: **THE POST OFFICE**
**23 Howland Street**
**London W1P 6HQ (GB)**

(72) Inventor: **Cantwell, Brian David**
**1 Saddlers Place Martlesham Heath**
**Ipswich IP5 7SS (GB)**

(74) Representative: **Smith, Norman Ian et al**
**F.J. CLEVELAND & COMPANY 40-43 Chancery
Lane**
**London WC2A 1JQ (GB)**

(56) References cited:
**POLYTECHNISCH TIJDSCHRIFT
ELEKTROTECHNIEK/ELECTRONICA, no. 6,
1979, Den Haag, NL. "De toepassing van
apparatuur voor de analyse van
datanetwerken", pages 377-380**

**COMPUTER DESIGN, vol. 17, no. 6, June 1978,
page 22 Winchester, G.B. "Preprogrammed
analyzer Eases Trouble-shooting of Data
Networks"**

**VDI ZEITSCHRIFT, vol. 120, no. 15/16, August
1978, pages 743-746 Düsseldorf, DE. BECKER:
"Videotext und Bildschirmtext, zwei neuartige
Telekommunikationsformen"**

Courier Press, Leamington Spa, England.

## Description

This invention relates to data transmission systems. The invention particularly relates to the monitoring of a data transmission system.

In a data transmission system of the viewdata type information is stored in a computer based at a viewdata centre. The computer has a plurality of ports each of which is linked to the public telephone switched telephone network by an interface line and a modem. Users of the system can access the computer by way of the public switched telephone network using suitable terminal equipment such as a modified television set and a key pad for use in accessing the computer. The computer centre is generally unmanned and there is a requirement for a monitoring facility to enable remote monitoring of the computer access ports to be carried out. The present invention is concerned with an arrangement which can provide such a facility.

U.S. Patent Specification No. 3 943 348 describes an information transmission system in which a central computer has a plurality of interface circuits each connected to a telephone line. The computer can be accessed from a remote terminal or terminals via a telephone line and interface circuit. The system has a monitoring device for checking the interface circuits and recording and analysing the results thereof. In this prior art system each interface circuit is taken out of service during a monitoring operation.

The present invention is concerned with a system in which the interface circuits can be monitored without taking them out of service.

According to the present invention there is provided an information transmission system comprising a central computer with a plurality of interface circuits each connected to a telephone line for communication with a remote terminal, and monitoring means for successively checking the interface circuits and recording and analysing the results thereof, characterised in that the monitoring means includes store means, means arranged in operation cyclically to scan status outputs of the interface circuits without effecting disconnection of the interface circuits from the lines, to recognize, for each interface circuit, on the basis of the states of those outputs, the occupancy of the interface circuit and the detection or otherwise of transmitted and of received signals, and to record such information in the store means, and means responsive to the stored information to generate for transmission to a monitoring location signals indicative of the state of the interface circuits.

The monitoring means may be arranged for each interface circuit, to check the contents of the store means and whenever the relative times of occurrence of the circuit coming on line, of the direction of transmitted data and of the detection of received data lie outside predetermined limits, to include an error report in the said signals for transmission to a monitoring location.

The monitoring means may be arranged to generate signals to the same standard as used for the remote terminals, whereby a terminal unit may be used at the monitoring location to display information relating to the condition of the interface circuits, which terminal is substantially identical to said remote terminals.

The system may include a terminal at a monitoring location, the terminal including colour visual display means, the arrangement being such as to display on the visual display a plurality of geometric shapes each of which has a colour indicative of the condition of a respective one of the said interface circuits. The shapes may be displayed as a matrix of m by n characters.

The invention will be described now by way of example only with particular reference to the accompanying drawings. In the drawings:

Figure 1 is plan schematic view illustrating the manner in which monitoring apparatus in accordance with the present invention is used in a viewdata system;

Figure 2 is a block schematic diagram of a monitoring apparatus in accordance with the present invention;

Figures 3 and 4 illustrate display layouts as used in the present apparatus, and

Figures 5a to 5c, 6a to 6c and 7a to 7c are flowcharts illustrating a program for the microprocessor.

Viewdata is a system for providing information. The system is based upon a computer in which the information is stored. Users of the system can access the computer by way of the public switched telephone network using suitable terminal equipment. The terminal equipment includes a visual display unit, typically a modified television set, and a key pad for use in accessing the computer.

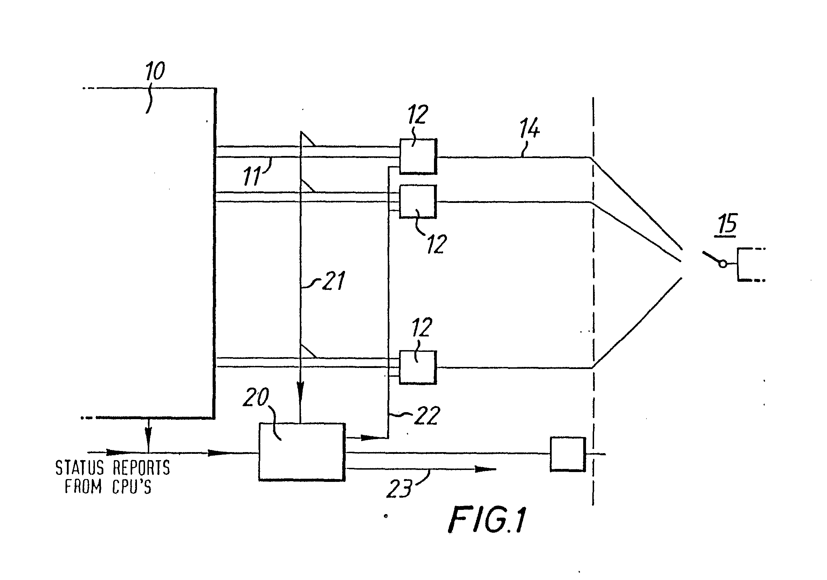

The computer is located at a viewdata centre which is illustrated schematically in Figure 1 of the drawings. The computer is shown at 10 and has a plurality of access ports each of which is connected by a V24 interface cable 11 to a modem 12. Each modem 12 provides an interface between the cable 11 and a two-wire telephone line 14 which links the modem to a telephone exchange 15. When a customer dials the viewdata centre a telephone link is established in the computer via the exchange 15, one of the two wire lines 14, a modem 12 and an interface cable 11.

The present description relates to a monitoring apparatus which can monitor the condition of each modem 12 and the associated cable interface 11. The monitoring apparatus is shown schematically at 20 and has an input 21 from each of the cables 11. The monitoring apparatus 20 has an output 22 which can be used to provide a signal to "busy" each of the modems, i.e. to take each of the modems out of operation. The apparatus also has other outputs which include an output 23 which leads via a private wire to a display unit for displaying information received by the apparatus 20 via inputs 21. This display unit can be similar to that used in a customer's terminal equipment.

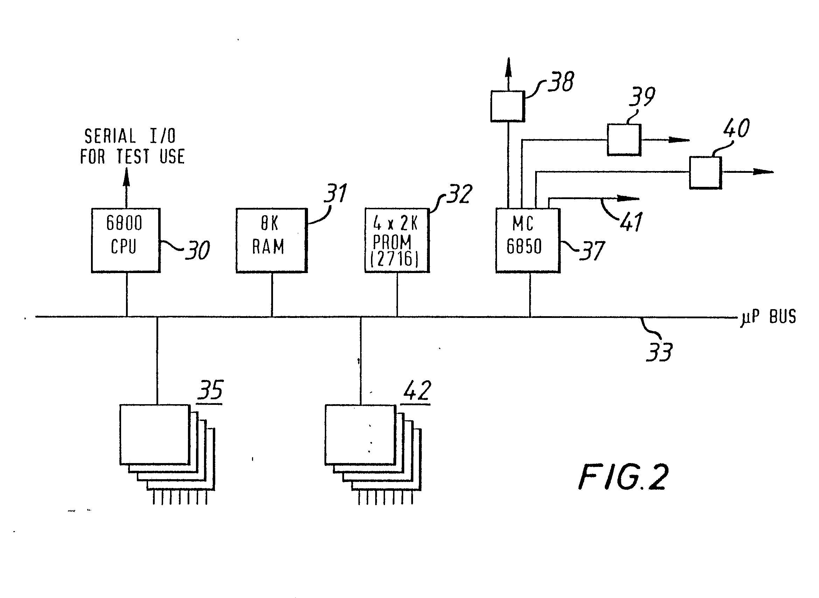

The monitoring apparatus 20 is shown schematically in more detail in Figure 2. The apparatus is based upon a Motorola M6800 Microprocessor 30. The microprocessor 30 has an associated 8K random access memory 31 and a 4 × 2 K programmable read only memory 32 both of which are linked to the microprocessor by a microprocessor bus 33 having 16 address, 8 data and an appropriate number of control lines.

The apparatus 20 also has a plurality of 8 bit parallel input/output latches which are mounted on boards shown at 35. The boards 35 have 196 4 bit inputs which are connected one of each of the viewdata modems 12. Each of the latches is associated with a pair of input ports, four of its bits representing the status of one port and the other four representing the status of the other port. The boards containing the latches are connected to the microprocessor bus 33.

The apparatus also has a four channel serial input/output device comprising an MC6850 ACIA interface 37 which is linked to the microprocessor bus 33. The interface 37 provides a connection to a viewdata operations centre via a modem 38, to a local viewdata managers office via a modem 39, to a public switched telephone network access via a modem 40 and to a local site display indicated at 41. The output from the interface 37 is transmitted at 1200 bits/sec over a Datel 600 circuit with a full duplex return speed of 75 bits/sec.

The microprocessor bus 33 also has a connection to a plurality of boards 42 which comprise 196 1 bit busy control outputs each of which have a connection to one of the modems 12. The inputs to the circuits 35 are standard V28 levels. In order to render the levels suitable for the latches, the boards 35 include circuits for converting the levels.

The port signals that are monitored via the input/output latches 35 are:

1) Modem on line, i.e. customer using the modem.

2) Received carrier detected from customer's modem.

3) Transmitted data detected.

4) Modem busied via monitoring equipment.

The first three signals are derived directly from the normal computer/modem interface circuits. The fourth signal is derived from a contact of a relay in the control unit of each modem.

The control programs for the apparatus are contained within the memory 32 which is nonvolatile. In operation when the apparatus is switched on power is applied and all units are reset. The microprocessor 30 looks to the memory 32 for instructions and its first action is to set up the input/output interface circuit 37 to the correct condition. The next instruction results in the microprocessor clearing the random access memory 31. When the memory 31 has been cleared the microprocessor 30 begins scanning the latches on the boards 35. As the microprocessor scans the latches it feeds into locations in the memory 31 information indicative of the status of each of the 196 ports which are being monitored so that a stable table indicative of the status of the ports is created. The ports are scanned cyclically, each scan taking approximately 50 milli seconds.

Every 120th of a second the scanning is interrupted on receipt by the microprocessor of an interrupt signal from the circuit 37. Upon receipt of such an interrupt signal the microprocessor looks to a particular memory location in the RAM 31 and transfers the information from that location, which represents the status of a particular port, to the circuit 37 which assembles this information into a message for transmission on its four output lines. The microprocessor 30 then continues scanning the latches 35 until it receives the next interrupt signal when another memory location in the RAM 31 is addressed. It will be noted that the circuit 37 transmits characters to all four of its outputs at the rate of 120 characters per second, each character representing the status of a port. As a display unit has 960 characters in a frame block there is a refresh time of 8 seconds. The display is updated continuously during normal status display with a cursor "home" character after each 960 character frame block.

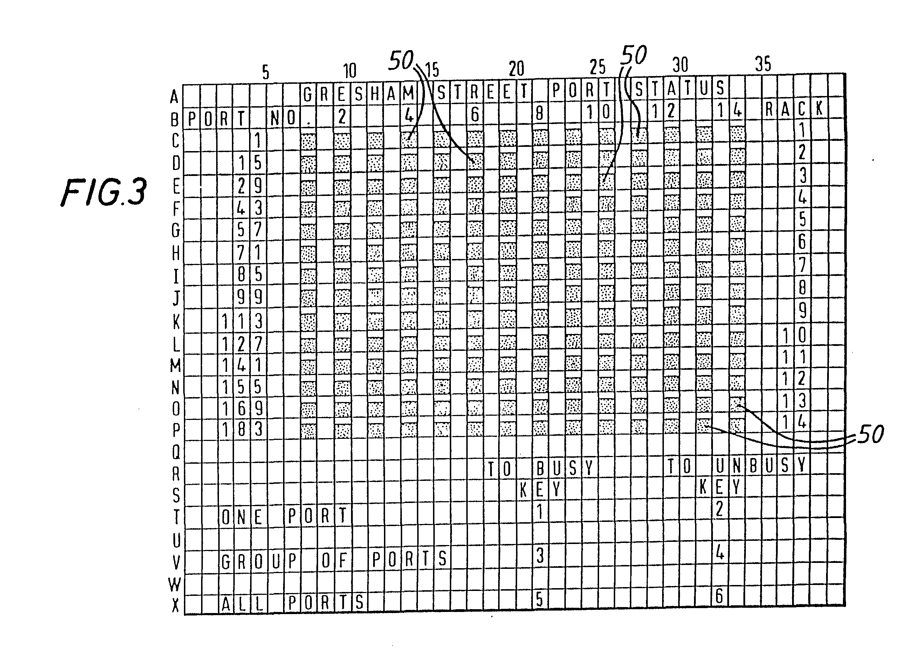

The manner in which the information relating to the ports is displayed is shown in Figure 3. This figure represents a conventional viewdata display layout. It consists of an array of 960 characters in a 40 × 24 matrix. Each port is represented by a block 50, the colour illuminated in each block being indicative of the status of the port as monitored. The arrangement is such that the condition of up to 196 ports can be displayed. The status colours can be as follows:

BLUE — not in use
GREEN — free waiting for a call
CYAN — call in progress
YELLOW — modem on line
MAGENTA — carrier detected
RED — port busied out.

During normal status display the frame is continuously written with the cursor "home" character after each frame of 960 characters.

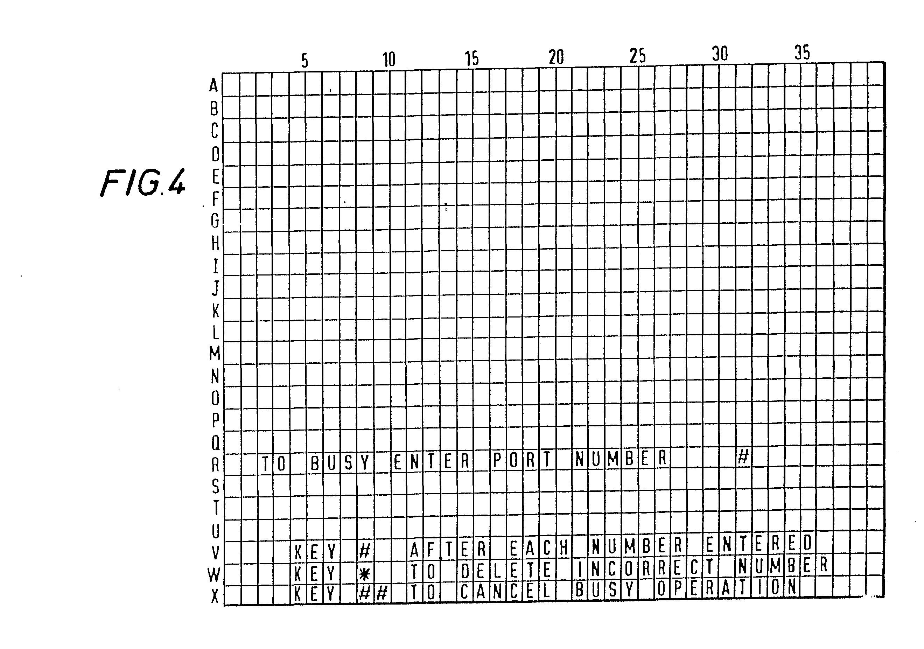

Facilities are provided for busying a particular port from a viewdata operations centre. This can be done by pressing an appropriate key which sends a signal via the output circuits 42 to the relevant port. When a busy command is received by the apparatus 20 from one of its control-port inputs the other control-port inputs are disabled for 30 seconds. Thus, such a command passes control of the unit to the first control-port input to send the command. The 30 second period is renewed on each subsequent character received from the active control-port input and during these periods the status display is not up-dated. The validity of the busy control characters are tested and the interactive message is displayed on the lower half of the viewdata receiver. Receipt of a valid character causes a reply message to be sent to all active outputs. A typical busy reply frame is shown in Figure 4. Such frames are transmitted when the related busy choice number is received. The reply overwrites the busy choice display leaving the status display intact for operator convenience.

Following a valid busy choice, a three-digit character string is received from the active input and formed into a port number or code number. This number is checked for validity in relation to the chosen busy command, and an error-message sent if the number is incorrect. If the busy choice requires a second number, for the operation chosen, the above operation is repeated. In addition, the two numbers are checked to ensure that the second entry is equal or greater than the first before proceeding. After all required input has been received the busying operation is carried out and the normal display of status resumed.

The apparatus also has an error checking facility which can detect the following error states:

1) A modem on line but no carrier signal detected within 20 seconds of modem on line detection.

2) A carrier signal detected but no transmission data detected within 2 seconds of the first detection of the carrier signal.

Errors are detected by checking the contents of the memory 31 for each port and when an error state is detected the busy control output for that port is set on. An error report message is transmitted to all the outputs of the circuit 37 together with printer control characters to enable a printer record to be made at appropriate control centres which are equipped with printers. When an error is detected the lower half of the display is overwritten by the error message leaving the status display intact for the period of the error display. The error message is maintained for 1 minute before normal operation of the apparatus 20 is restored.

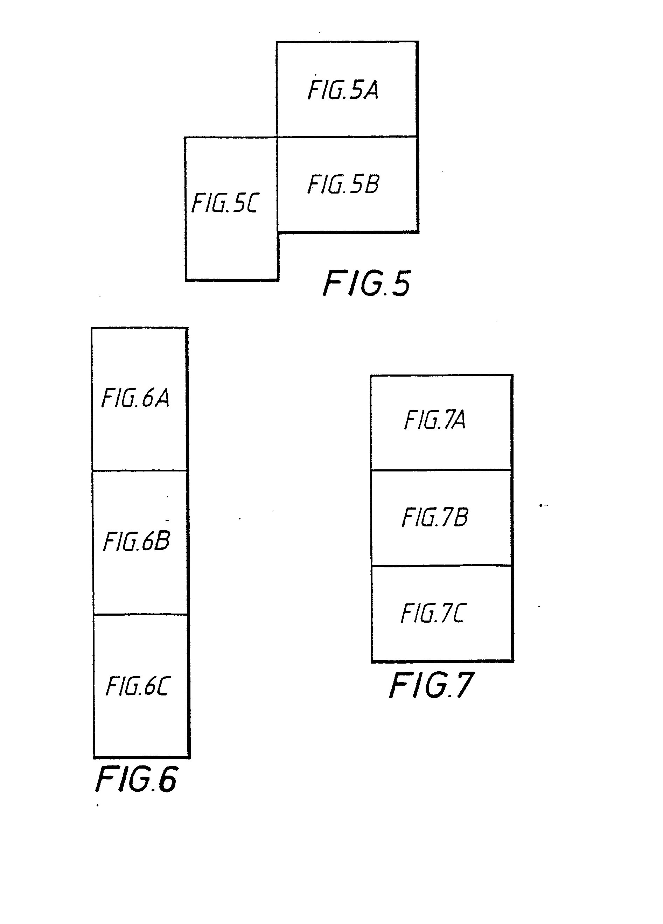

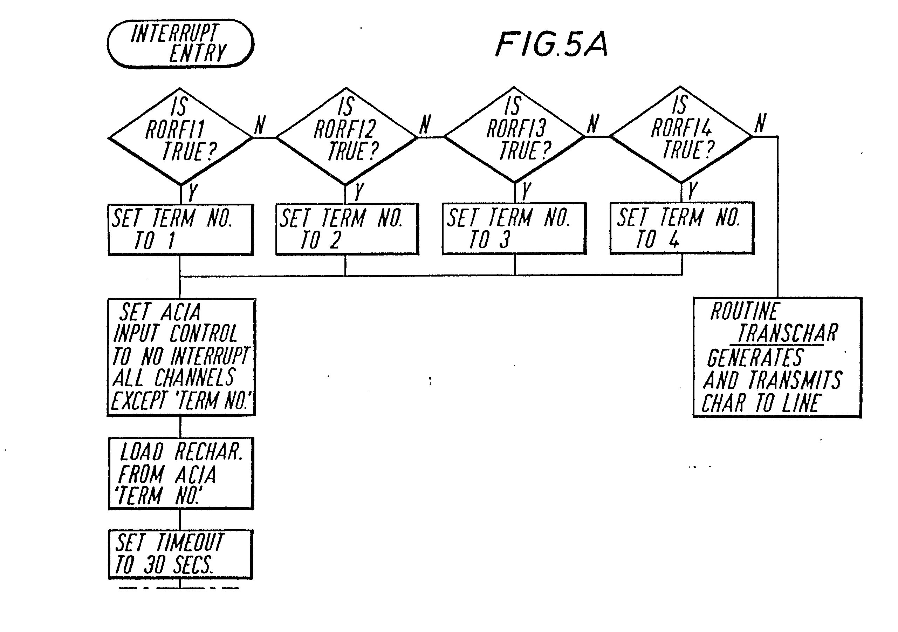

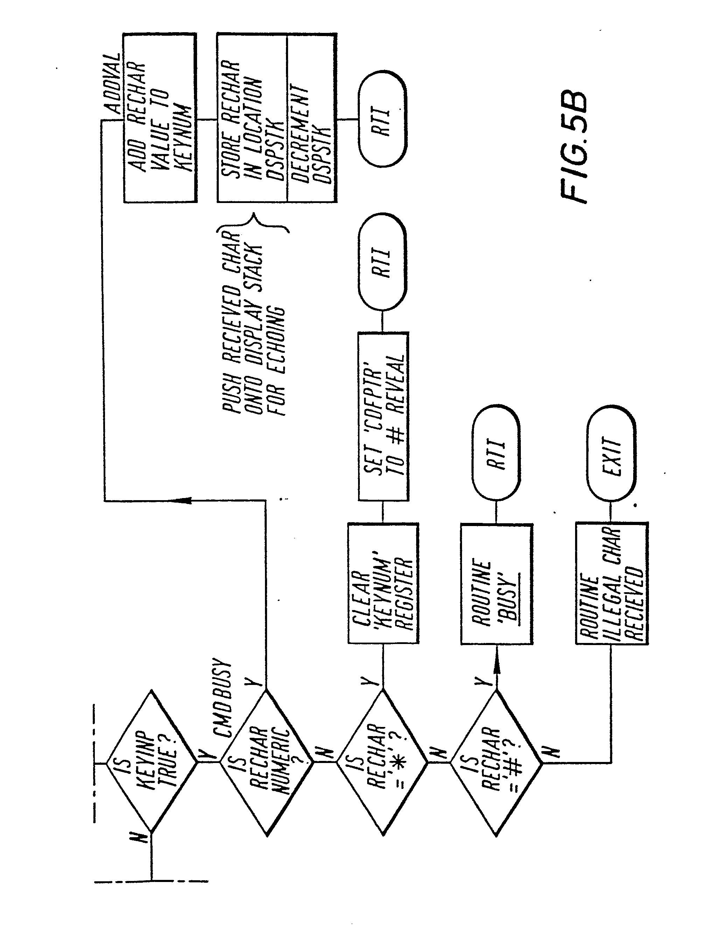

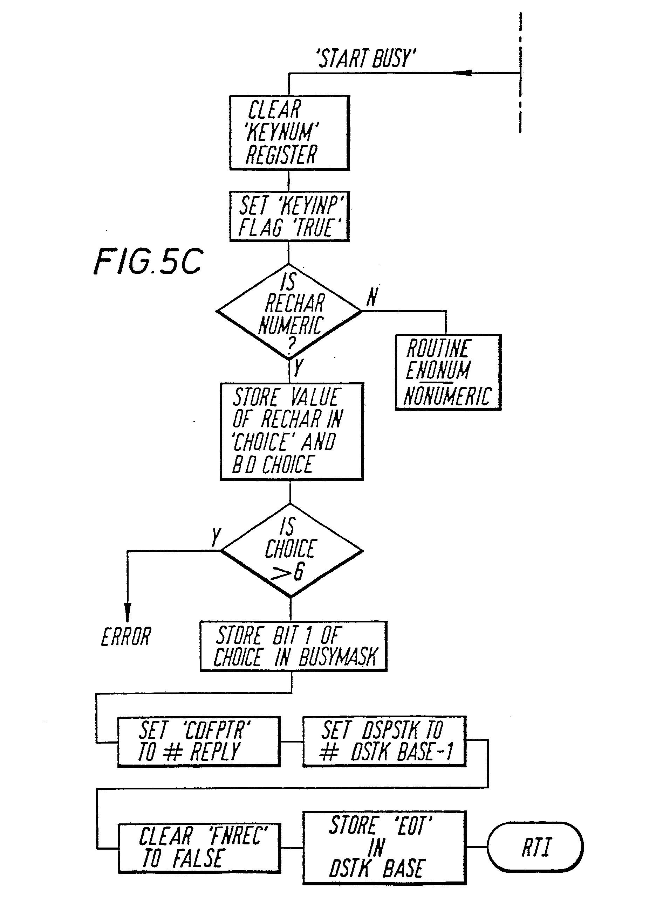

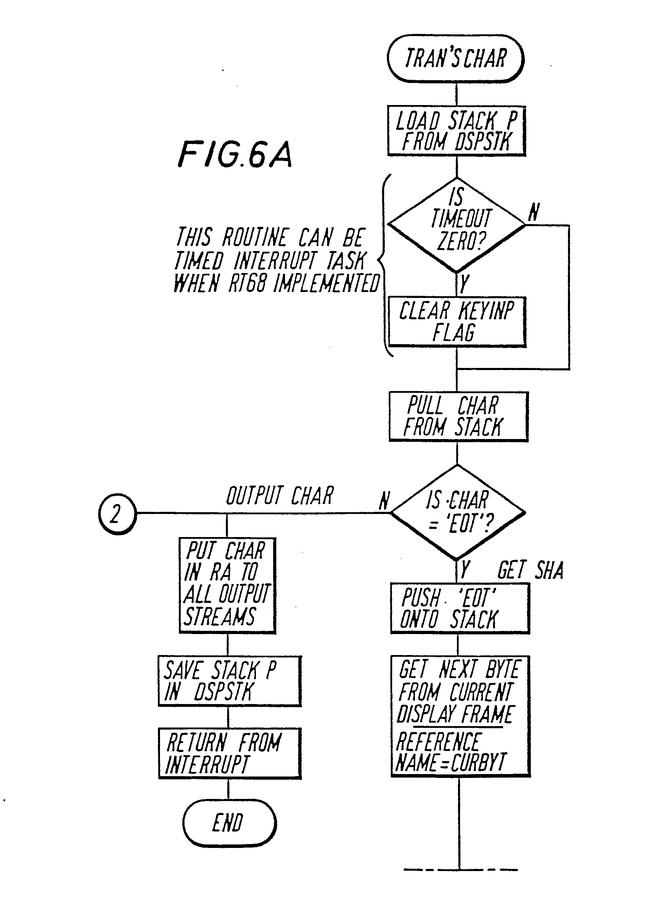

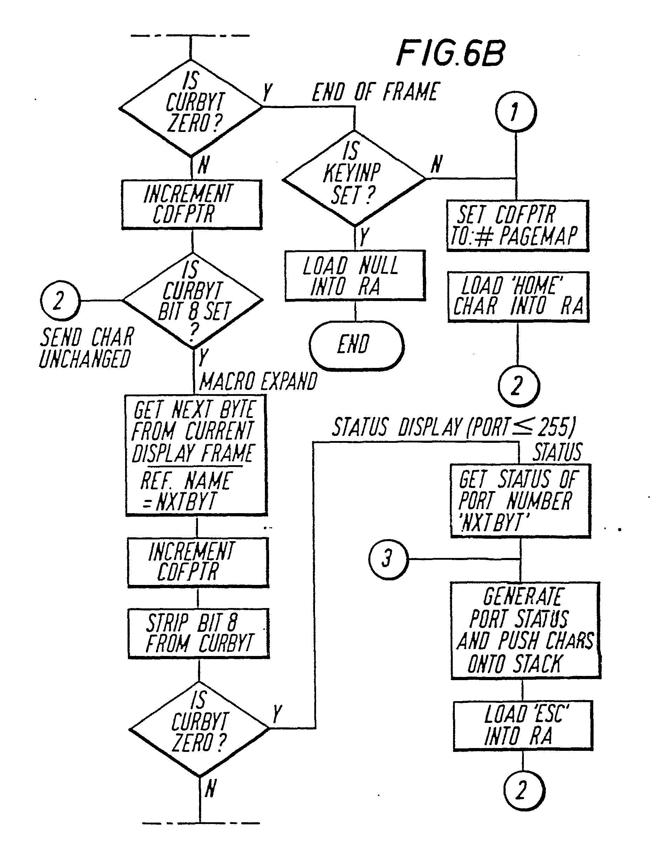

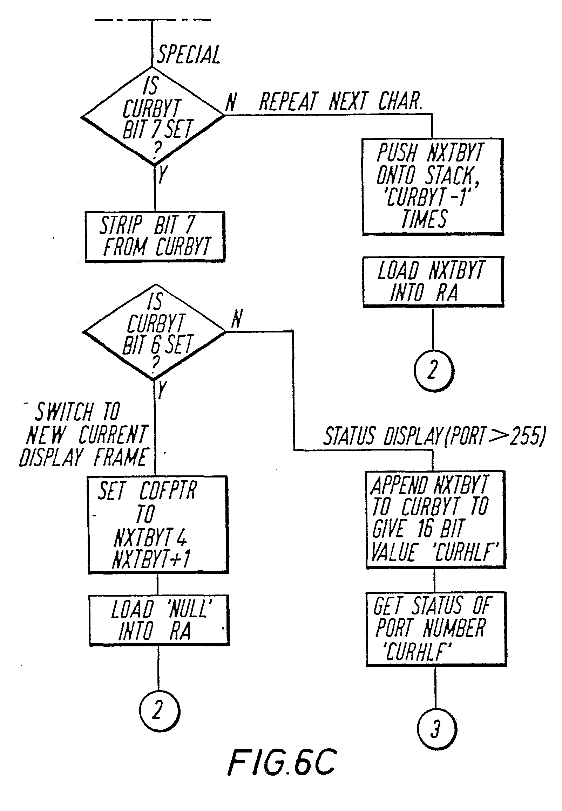

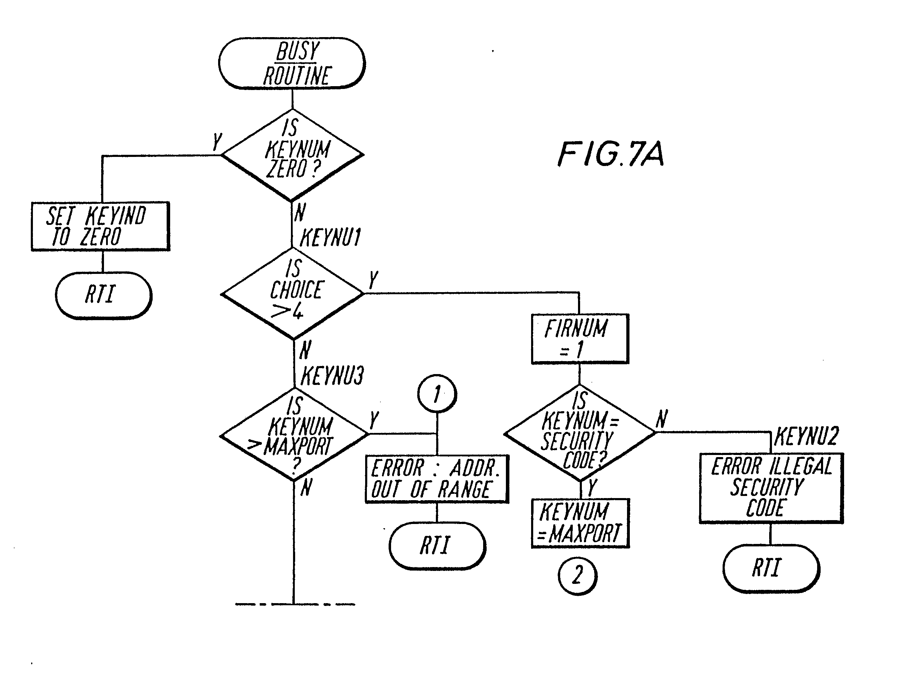

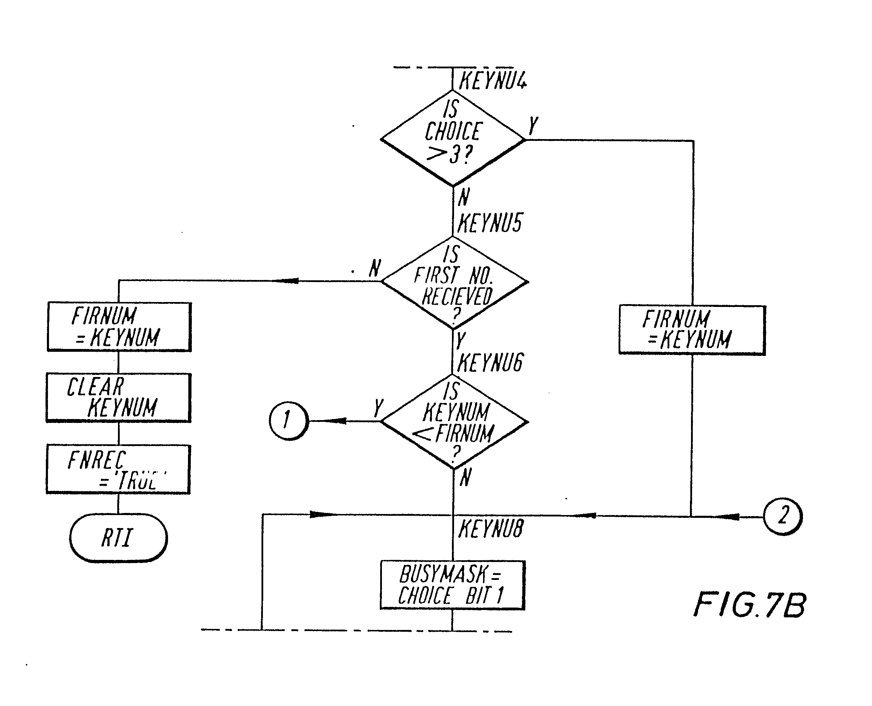

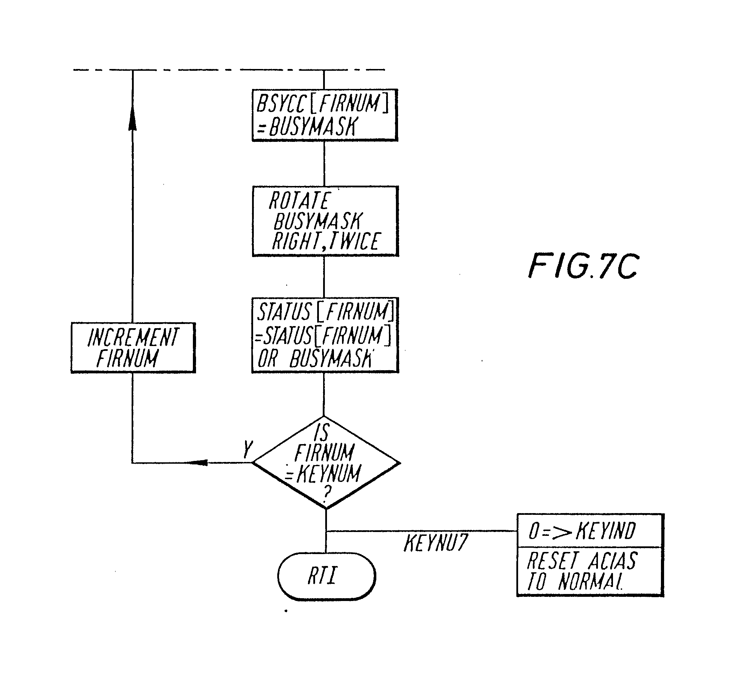

A flowchart illustrating one example of the way in which the microprocessor can be programmed is given in Figures 5a to 5c, 6a to 6c and 7a to 7c.

## Claims

1. An information transmission system comprising a central computer (10) with a plurality of interface circuits (11, 12) each connected to a telephone line (14) for communication with a remote terminal, and monitoring means (20) for successively checking the interface circuits and recording and analysing the results thereof, characterised in that the monitoring means includes store means (31), means (30, 35) arranged in operation cyclically to scan status outputs (21) of the interface circuits without effecting disconnection of the interface circuits from the lines, to recognise, for each interface circuit, on the basis of the states of those outputs, the occupancy of the interface circuit and the detection or otherwise of transmitted and of received signals, and to record such information in the store means, and means (37, 38, 39, 40) responsive to the stored information to generate for transmission to a monitoring location signals indicative of the state of the interface circuits.

2. An information transmission system according to claim 1, in which the monitoring means (20) is arranged, for each interface circuit, to check the contents of the store means (31) and whenever the relative times of occurrence of the circuit coming on line, of the detection of transmitted data and of the detection of received data lie outside predetermined limits, to include an error report in the said signals for transmission to the monitoring location.

3. Apparatus according to claim 1 or claim 2 characterised in that the monitoring means (20) is arranged to generate signals to the same standard as used for the remote terminals, whereby a terminal unit may be used at the monitoring location to display information relating to the condition of the interface circuits, which terminal is substantially identical to said remote terminals.

4. Apparatus according to claim 1, 2 or 3 in combination with a terminal unit at a monitoring location, characterised in that the terminal includes colour visual display means, the arrangement being such as to display on the visual display a plurality of geometric shapes (50) each of which has a colour indicative of the condition of a respective one of the said interface circuits.

5. Apparatus according to claim 4 characterised in that the shapes are displayed as a matrix of m by n characters.

## Patentansprüche

1. Informationsübertragungssystem mit einem zentralen Rechner (10), der mehrere Schnittstellenschaltungen (11, 12) aufweist, die jeweils mit einer Telefonleitung (14) für den Verkehr mit einem abgesetzten Terminal verbunden sind, und

einer Überwachungseinrichtung (20), die die Schnittstellenschaltungen aufeinanderfolgend prüft und das Prüfergebnis aufzeichnet und auswertet, dadurch gekennzeichnet, daß die Überwachungseinrichtung (20) aufweist:

— eine Speichereinrichtung (31),

— eine Einrichtung (30, 35), die zyklisch Zustandsausgänge (21) der Schnittstellenschaltungen (11, 12) ohne diese von den Leitungen zu trennen, abtastet und für jede Schnittstellenschaltung auf der Grundlage des Zustands dieser Ausgänge (21) den Besetztzustand der Schnittstellenschaltung und die Erfassung gesendeter oder empfangener Signale erkennt, diese Information in der Speichereinrichtung aufzeichnet und

— eine Einrichtung (37, 38, 39, 40), die auf die gespeicherte Information hin Signale über den Zustand der Schnittstellenschaltungen zur Übertragung zu einem Überwachungsort erzeugt.

2. Informationsübertragungssystem nach Anspruch 1, dadurch gekennzeichnet, daß die Überwachungseinrichtung (20) für jede Schnittstellenschaltung angeordnet ist und die Inhalte der Speichereinrichtung (31) prüft und, falls die relativen Zeiten der Leitungsanschaltung der Schnittstellenschaltung, der Erfassung gesendeter Daten und der Erfassung empfangener Daten außerhalb vorgegebener Grenzen liegen, den zum Überwachungsort zu sendenden Signalen eine Fehlernachricht hinzufügt.

3. Vorrichtung nach Ansprüch 1 oder 2, dadurch gekennzeichnet, daß die Überwachungseinrichtung (20) Signale der gleichen Norm erzeugt, wie sie für die abgesetzten Terminals verwendet wird, wobei eine Terminaleinheit am Überwachungsort zur Anzeige von Information über den Zustand der Schnittstellenshaltungen verwendet Wird, die mit den abgesetzten Terminals im wesentlichen identisch ist.

4. Vorrichtung nach einem der Ansprüche 1, 2 oder 3, in Kombination mit einer Terminaleinheit am Überwachungsort, dadurch gekennzeichnet, daß die Terminaleinheit eine Farbsichtanzeige enthält, die so gestaltet ist, daß die Sichtanzeige mehrere geometrische Formen (50) anzeigt, die jeweils eine den Zustand der jeweiligen Schnittstellenschaltung angebende Farbe haben.

5. Vorrichtung nach Ansprüch 4, dadurch gekennzeichnet, daß die geometrischen Formen (50) als eine aus m × n Zeichen gebildete Matrix angezeigt wird.

**Revendications**

1. Un système de transmission d'information comprenant un ordinateur central (10) avec un ensemble de circuits d'interface (11, 12), chacun d'eux étant connecté à une ligne téléphonique (14) pour communiquer avec un terminal distant, et des moyens de surveillance (20) pour contrôler successivement les circuits d'interface et pour enregistrer et analyser les résultats du contrôle, caractérisé en ce que les moyens de surveillance comprennent des moyens d'enregistrement (31), des moyens (30, 35) conçus de façon à scruter d'une manière cyclique des sorties d'état (21) des circuits d'interface, sans déconnecter les circuits d'interface par rapport aux lignes, à reconnaître, pour chaque circuit d'interface, sur la base des états de ces sorties, l'occupation du circuit d'interface et la détection ou autre de signaux émis et de signaux reçus, et à enregistrer cette information dans les moyens d'enregistrement, et des moyens (37, 38, 39, 40) qui réagissent à l'information enregistrée en produisant, pour l'émission vers un emplacement de surveillance, des signaux représentatifs de l'état des circuits d'interface.

2. Un système de transmission d'information selon le revendication 1, dans lequel les moyens de surveillance (20) sont conçus de façon à contrôler le contenu des moyens d'enregistrement (31), pour chaque circuit d'interface, et à incorporer une indication d'erreur dans les signaux destinés à être émis vers l'emplacement de surveillance, chaque fois que les instants relatifs du passage du circuit en ligne, de la détection des données émises et de la détection des donées reçues se trouvent à l'extérieur de limites prédéterminées.

3. Appareil selon la revendication 1 ou 2, caractérisé en ce que les moyens de surveillance (20) sont conçus de façon à produire des signaux répondant à une norme identique à celle utilisée pour les terminaux distants, grâce à quoi on peut utiliser à l'emplacement de surveillance, pour afficher une information concernant l'état des circuits d'interface, un terminal pratiquement identique aux terminaux distants.

4. Appareil selon la revendication 1, 2 ou 3, en combinaison avec un terminal situé à un emplacement de surveillance, caractérisé en ce que le terminal comprend des moyens de présentation visuelle en couleur, avec une configuration telle que les moyens de présentation visuelle affichent un ensemble de formes géométriques (50) ayant chacune une couleur représentative de l'état de l'un respectif des circuits d'interface.

5. Appareil selon la revendication 4, caractérisé en ce que les formes sont affichées par une matrice de m par n caractères.

STATUS REPORTS
FROM CPU'S

*FIG.1*

0 033 591

FIG.2

FIG.3

GRESHAM STREET PORT STATUS

PORT NO. 2    4    6    8    10    12    14    RACK

TO BUSY
KEY

TO UNBUSY
KEY

ONE PORT        1              2

GROUP OF PORTS  3              4

ALL PORTS       5              6

0 033 591

FIG.4

FIG.5A

FIG.5C FIG.5B

*FIG.5*

FIG.6A

FIG.6B

FIG.6C

*FIG.6*

FIG.7A

FIG.7B

FIG.7C

*FIG.7*

FIG.5A

INTERRUPT ENTRY

IS RORFI1 TRUE? → N → IS RORFI2 TRUE? → N → IS RORFI3 TRUE? → N → IS RORFI4 TRUE? → N

Y — SET TERM NO. TO 1

Y — SET TERM NO. TO 2

Y — SET TERM NO. TO 3

Y — SET TERM NO. TO 4

SET ACIA INPUT CONTROL TO NO INTERRUPT ALL CHANNELS EXCEPT 'TERM NO.'

LOAD RECHAR. FROM ACIA 'TERM NO.'

SET TIMEOUT TO 30 SECS.

ROUTINE TRANSCHAR GENERATES AND TRANSMITS CHAR TO LINE

0 033 591

FIG.5B

0 033 591

'START BUSY'

CLEAR
'KEYNUM'
REGISTER

SET 'KEYINP'
FLAG 'TRUE'

*FIG.5C*

IS
RECHAR
NUMERIC
?

ROUTINE
ENONUM
NONUMERIC

STORE VALUE
OF RECHAR IN
'CHOICE' AND
B D CHOICE

IS
CHOICE
>6

Y

ERROR

STORE BIT 1 OF
CHOICE IN BUSYMASK

SET 'CDFPTR'
TO # REPLY

SET DSPSTK TO
# DSTK BASE-1

CLEAR 'FNREC'
TO FALSE

STORE 'EOT'
IN
DSTK BASE

RTI

# FIG.6A

THIS ROUTINE CAN BE
TIMED INTERRUPT TASK
WHEN RT68 IMPLEMENTED

# FIG.6B

FIG.6C

0 033 591

FIG.7A

BUSY
ROUTINE

IS KEYNUM ZERO ?
— Y → SET KEYIND TO ZERO → RTI
— N

KEYNU1

IS CHOICE >4
— Y → FIRNUM = 1 → IS KEYNUM = SECURITY CODE?
  — Y → KEYNUM = MAXPORT → (2)
  — N → KEYNU2 → ERROR ILLEGAL SECURITY CODE → RTI
— N

KEYNU3

IS KEYNUM >MAXPORT ?
— Y → (1) → ERROR : ADDR. OUT OF RANGE → RTI
— N

FIG.7B

KEYNU4
IS CHOICE >3?  Y / N
FIRNUM = KEYNUM

KEYNU5
IS FIRST NO. RECIEVED?  Y / N

KEYNU6
IS KEYNUM <FIRNUM?  Y / N

KEYNU8
BUSYMASK = CHOICE BIT 1

FIRNUM = KEYNUM
CLEAR KEYNUM
FNREC = 'TRUE'
RTI

2

1

BSYCC[FIRNUM]
=BUSYMASK

ROTATE
BUSYMASK
RIGHT,TWICE

STATUS[FIRNUM]
=STATUS[FIRNUM]
OR BUSYMASK

INCREMENT
FIRNUM

IS
FIRNUM
=KEYNUM
?

Y

KEYNU7

RTI

0=>KEYIND
RESET ACIAS
TO NORMAL

**FIG.7C**